# EUROPEAN PATENT SPECIFICATION

(11) **EP 4 058 740 B1**
(45) Date of publication and mention of the grant of the patent: **31.12.2025**
(21) Application number: 19952226.9
(22) Date of filing: 13.11.2019
(51) Int. Cl.: F24T 10/17, F16L 1/028, F24T 10/00

(54) **OUTER PIPE FOR FORMING A COAXIAL HEAT TRANSFER PIPING, AND A HEAT TRANSFER PIPING INSTALLATION METHOD**
AUSSENROHR ZUR BILDUNG KOAXIALER WÄRMEÜBERTRAGUNGSROHRE UND VERFAHREN ZUR VERLEGUNG VON WÄRMEÜBERTRAGUNGSROHREN
TUYAU EXTERNE POUR FORMER UNE TUYAUTERIE DE TRANSFERT DE CHALEUR COAXIALE, ET PROCÉDÉ D'INSTALLATION DE TUYAUTERIE DE TRANSFERT DE CHALEUR

(43) Date of publication of application: 21.09.2022
(73) Proprietor: Senera Oy, 01380 Vantaa (FI)
(72) Inventor: MANNER, Mika, 02330 Espoo (FI)
(74) Representative: Papula Oy
(86) International application number: PCT/FI2019/050809
(87) International publication number: WO 2021/094644

(56) References cited:
- EP-B1- 1 147 348
- EP-B1- 1 147 348
- US-A- 4 715 429
- US-A1- 2011 036 112
- US-A1- 2015 068 740
- US-A1- 2015 068 740
- US-A1- 2016 018 133
- US-A1- 2016 018 133
- US-A1- 2019 154 307

## Description

### BACKGROUND OF THE INVENTION

The utilization of geothermal energy for heating real properties is rapidly increasing. The increase in geothermal heating also for the heating of large properties such as multi-storied buildings and industrial plants has created a need to look for more and more efficient heat transfer systems and methods. This has led to the use of deeper and deeper geothermal wells.

As the depth of the geothermal well and thereby the length of the heat collecting piping are growing, certain physical limits will begin to restrict the scaling of the heat collecting system. As the length of the heat collecting piping in growing, the pressure loss through the piping grows as well. For example with a well depth of 300 m, when using the traditional U-pipe, the total length of the pipe is 600 m. With a typical pipe having a diameter of 40 or 45 mm, this length already creates pressure losses which begin to weaken the heat pump efficiency as a result of the increased energy needed for pumping.

As the well depth is increasing, considering the drilling costs, efficient utilization of the geothermal well formed by the borehole and improvement of a thermal contact between the heat collecting piping and bedrock, coaxial collectors, i.e. coaxial heat transfer pipings are gaining ground over the traditional U-collectors.

To be able to make maximum use of the geothermal well formed by the borehole, the essential question is how the relatively rigid and large coaxial collector can be installed into the borehole which is up to hundreds of meters deep in such a way that the installed collector maintains a good thermal contact with the bedrock surrounding the borehole.

Publication US 2016/0018133 A1 discloses a solution in which the outer jacket of a coaxial collector is substantially flattened to a U shape along a longitudinal direction of the collector when the coaxial collector is being installed into the borehole, such that the outer diameter of the collector is smaller than in the final operating conditions, and is not opened to the operating form until in the borehole by means of pressure, after which an inner pipe is inserted into the opened outer pipe.

The solution facilitates the installation of the outer jacket into the borehole and enables the use of an outer jacket which in the operating form comes close to the size of the borehole. However, there is room for development is this solution. For example, an annular gap is in practice left between the outer jacket having been opened to the operating form and the wall of the borehole, which gap has to be filled with a heat conductive filler for improving the thermal contact between the heat collector and the bedrock.

Another problem which is not mitigated by the solution of said US publication relates to thermal expansion of the heat collector. Thermal expansion coefficients of the plastics used as material in the collector are relatively high, whereby in the case of a well which is hundreds of meters deep the back-and-forth length variations caused by the thermal expansion of the heat collector may be several meters. As a result, for example rock material possibly left in the gap between the outer jacket and the borehole may in the worst case wear through the outer jacket. The case is the same even if such loose rock material would not be present between the heat collector and the wall of the geothermal well, because then the outer jacket may be able to rub directly against the wall of the geothermal well formed by the borehole.

An additional challenge is also introduced by the fact that the borehole is practically always slightly conical due to wearing of the drill bit, whereby matching the size of the outer jacket to the changing diameter of the borehole is difficult in the solution disclosed in the above-mentioned US-publication.

The challenges caused by wearing of the drill bit become more and more emphasized as the boreholes used are becoming deeper. The diameter of the drill bit is typically reduced by appr. 0.5-1 mm per hundred meters of drilled rock. An appr. 300 m deep geothermal well produced with the current technology, having a diameter of appr. 115 mm close to the ground surface as the drilling is started with a new drill bit, may have a diameter of for example 112 - 114 mm at the depth of 300 m. When geothermal wells are to be drilled down to a depth of e.g. 800 m, this means that the diameter of the geothermal well is reduced by appr. 4 - 8 mm along the full extent of the geothermal well. Thus, it is clear that a coaxial collector having a constant diameter is not a satisfactory solution considering the above-described problems.

US 2015/068740 A1 discloses a coaxial ground heat exchanger having a central core tube and a folded outer tube.

EP1147348 B1 discloses a soil heat exchanger with a ciculation system comprising an outer leg, an inner leg and connection hose.

Accordingly, there are clear needs for further developed solutions relating to the use of coaxial collectors especially in deep geothermal wells.

### SUMMARY OF THE INVENTION

This summary introduces a concise presentation of aspects which will be discussed further below in the detailed description of the invention. The summary is not intended to limit the invention and its embodiments exclusively to the features presented in the summary.

According to one aspect it is possible to provide an outer pipe formed from a crystallized plastic material for forming an outer jacket of a coaxial heat transfer piping.

The outer pipe has a first operating form in which, in a cross-section of the outer pipe, a main part of a wall of the outer pipe substantially follows a first circle.

The wall of the outer pipe comprises an elongated recess extending in a longitudinal direction of the outer pipe, at which recess in the cross-section of the outer pipe in the first operating form of the outer pipe the wall of the outer pipe deviates inwardly from said perimeter of the first circle, such that the perimeter of the wall of the outer pipe is longer than the perimeter of said first circle.

The outer pipe is forceable into an expanded operating form in which said main part of the wall of the outer pipe in the cross-section of the outer pipe substantially follows, as a result of straightening of the recess, a second circle which is larger than the first circle.

According to a second aspect it is possible to provide a method for installing a coaxial heat transfer piping into a geothermal well.

In the method an outer pipe as described above forming an outer jacket of the heat transfer piping is inserted into the geothermal well; and the outer pipe is forced from a first operating form into an expanded operating form, such that the outer pipe is arranged against a wall of the geothermal well.

### DESCRIPTION OF THE FIGURES

The detailed description presented below is intended, together with the figures, to illustrate the different features of the invention.
Fig. 1 and 2 illustrate cross-sections of outer pipes for coaxial heat transfer pipings.
Fig. 3 and 4 are flow charts illustrating methods for installing a coaxial heat transfer piping into a geothermal well.
Fig. 5 illustrates a mouthpiece for an installation apparatus for installing a coaxial heat transfer piping into a geothermal well.
Fig. 6 and 7 illustrate installation of a coaxial heat transfer piping into a geothermal well.

The figures and the details illustrated therein are not drawn to scale in all respects.

### DETAILED DESCRIPTION OF THE INVENTION

The detailed description of the invention presented below with reference to the figures gives various examples of the embodiments of the invention. However, the invention is not limited merely to these examples, but the embodiments of the invention may vary within the scope of the claims.

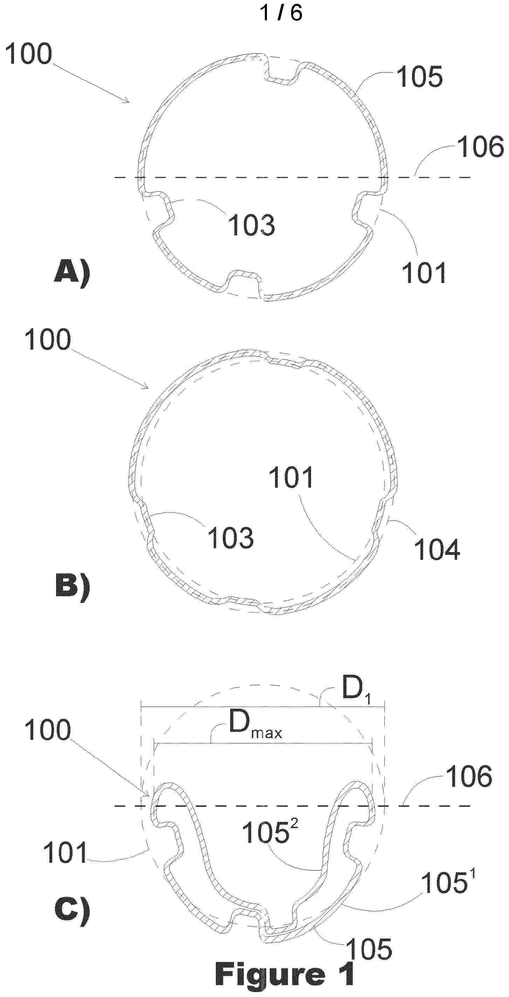

An outer pipe 100 of Fig. 1 may be used as a pipe forming an outer jacket of a coaxial heat transfer piping inserted into a geothermal well.

The geothermal well refers to an elongated borehole drilled into bedrock. This geothermal well formed by the borehole may be tens or even hundreds of meters deep.

The heat transfer piping inserted into the geothermal well may be used as a heat collecting piping, i.e. a heat collector, for collecting heat from the bedrock in a geothermal system. The concept of "heat transfer" which is more general than heat collection indicates on the other hand that the heat transfer piping may also be used for charging the geothermal well, i.e. for delivering heat via the geothermal well into the bedrock to be stored therein.

In general terms, the heat transfer piping refers to a piping arrangeable into the bedrock, in which piping a heat transfer medium may be conveyed for transferring heat between the bedrock and an external heating and/or cooling system.

The coaxial piping refers on the other hand to a piping in which there is an inner pipe formed by one flow channel and an outer jacket surrounding the inner pipe, whereby a second flow channel is formed between the wall of the inner pipe and the outer jacket. In the embodiments discussed in this connection, one continuous second flow channel surrounding the inner pipe is formed in the coaxial piping.

The structure of the coaxial heat transfer piping may be considered as an arrangement formed by an outer pipe and an inner pipe inserted within the outer pipe, whereby the wall of the outer pipe forms the outer jacket of the entire coaxial piping.

In the coaxial piping the inner pipe and the outer pipe/outer jacket may be located concentrically, i.e. "coaxially", such that the centre axes thereof coincide. However, in this connection it is clear that the centre axes of the inner and outer pipe/jacket of the coaxial heat transfer piping need not be exactly coincident, at least along the full length of the piping.

The outer pipe 100 may be manufactured from any suitable crystallized plastic material such as polyethylene PE including various modifications thereof such as PEL (polyethylene, low density), PEM (polyethylene, medium density), PEH (polyethylene, high density) and PEX (cross-linked polyethylene). The material may be crystallized also in the area of the recesses.

The "crystallized", i.e. crystalline plastic material refers to a plastic material in which most, most preferably substantially all atoms, molecules or molecular chains are arranged according to the three-dimensional crystalline structure which is specific to the compound of the given material.

Drawing A) of Fig. 1 illustrates the outer pipe 100 in a first operating form. This may be a free operating form. The "free" operating form refers to the cross-sectional shape of the outer pipe in which the pipe has originally been manufactured and which it may freely assume without external forces exerted on the pipe. In other embodiments the outer pipe may have been originally manufactured in some suitable form differing from the first operating form.

The "operating form" on the other hand refers to a basic form of the outer pipe, in which form it may be used as part of the coaxial heat transfer piping.

In said first operating form a main part of the wall of the outer pipe substantially follows, in a cross-section of the pipe, a first circle 101 indicated by a dashed line in the figure. This means that the portion of the outer pipe following said perimeter of the first circle covers most of the perimeter of the first circle. In the example of Fig. 1 this "main part" of the wall of the outer pipe in the cross-section of the outer pipe extends along a proportion of approximately 75% of the first circle, i.e. the length of the perimeter of the first circle. In other embodiments in which the outer pipe may have one or more recesses in the cross-section thereof, the main part of the outer pipe substantially following the perimeter of the first circle may extend for example along a proportion of 70 % or at least 85 % of the first circle. When said main part is sufficiently large, it is possible to ensure sufficient heat transfer communication between the heat transfer piping and the bedrock surrounding the geothermal well, as well as sufficiently strong pressing of the outer pipe against the wall of the geothermal well for keeping the outer pipe in place.

Outside said main part the wall of the outer pipe comprises four recesses 103 which are located in the cross-section of the outer pipe at a distance from each other at different points of the perimeter of the outer pipe. When the outer pipe is in the first operating form illustrated in drawing A) of Fig. 1, the wall of the outer pipe deviates inwardly from the perimeter of the first circle 101 at each recess.

The shape and dimensions of each recess are such that when the outer pipe is in the first operating form, the segment of the wall of the outer pipe formed by the recess in the cross-section of the outer pipe is longer than the segment of the perimeter of the first circle located at the recess and extending along the length of the recess. As a result, the perimeter of the wall of the outer pipe in the cross-section of the outer pipe is longer than the perimeter of the first circle.

As a result of the "excess" length of the perimeter of the wall of the outer pipe provided by the recesses, the outer pipe may be forced into an expanded operating form illustrated in drawing B) of Fig. 1. In the expanded operating form, as a result of straightening of the recesses, the main part of the wall of the outer pipe outside the recesses in the considered cross-sectional plane now substantially follows a second circle 104 which is larger than the first circle. The recesses thus function as outer pipe expanding zones, by means of which the outer pipe may be expanded from the first operating form to the expanded operating form while preserving the substantially round basic form thereof.

The expanded operating form may also be referred to as a "second" operating form.

The "first circle" and "second circle" are in this connection auxiliary features, by means of which the shape and size of the outer pipe may be examined. Thus, they are not parts of the outer pipe or any other concrete, physical objects.

The expanded operating form makes it possible that the outer pipe may be installed into a geothermal well which is larger than the outer dimensions of the first operating form and thereafter be forced into the expanded operating form, such that the outer pipe is arranged for the most part, outside any possible recesses not having been fully opened, against the wall of the geothermal well.

Many advantages may be achieved with said manner of installation. Firstly, it is possible to harness the full cross-section and thereby the maximal volume of the geothermal well for heat collection without a gap between the outer pipe and the wall of the geothermal well. At the same time, an excellent thermal contact between the outer pipe and the bedrock surrounding the geothermal well may be achieved. Thirdly, the outer pipe arranged for the main part thereof tightly against the wall of the geothermal well in the expanded operating form may be kept immovable in relation to the wall of the geothermal well by means of friction. Thus, a back-and-forth movement of the outer pipe rubbing the outer pipe against the wall of the geothermal well or the rock or soil material located between the geothermal well and the outer pipe in the longitudinal direction of the geothermal well due to thermal expansion of the outer pipe may be prevented or at least reduced.

In the example of Fig. 1 the diameter of the second circle is approximately 7.5 % larger than the diameter of the first circle. In other embodiments the second circle may have a diameter which is for example 5 % or more, for example 7 % or more, for example 10 % or more, for example up to 20 % or more larger than the first circle. For example an outer pipe designed for a 115 mm geothermal well may thus in the first operating form, for the main part thereof, follow a first circle having a diameter which is for example approximately 100 - 105 mm large.

The above-mentioned advantages based on the one or more recesses in the cross-section of the outer pipe are also achievable in the case of a geothermal well having a conical shape due to wearing of the drill bit. Deep in the geothermal well, the one or more recesses may straighten to a lesser extent when the outer pipe is being forced into the expanded operating form than in the upper parts of the geothermal well having a larger diameter. Thus, the second circle, the perimeter of which the main part of the wall of the outer pipe follows in the expanded operating form, may have a different size along different parts of the pipe, in different cross-sectional planes of the pipe.

In the example of Fig. 1 the recesses 103 are only partly straightened in the expanded operating form illustrated in drawing B). In other embodiments an individual recess may be, at least in some cross-sectional plane, substantially fully straightened. Accordingly, in the expanded operating form, in the cross-section of the outer pipe the wall of the outer pipe may substantially follow the second circle also along the portion thereof corresponding to the recess.

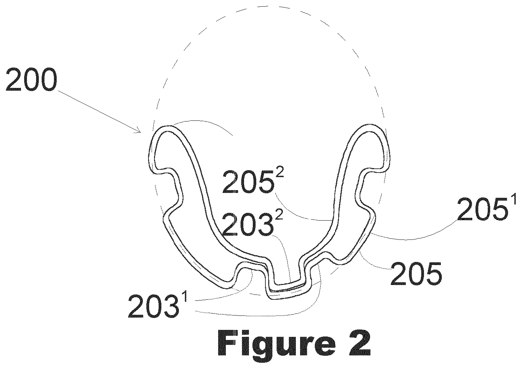

In other embodiments there may be, unlike in the example of Fig. 1, for example one, two, three or more than four recesses and they may be located in the cross-section of the outer pipe in many different ways along the perimeter of the outer pipe. One example is illustrated in Fig. 2.

At an individual recess the thickness of the wall of the outer pipe may be smaller, for example 10 - 60 % smaller, than in the parts of the outer pipe following the first circle in the first operating form. This may facilitate straightening of the recess and thereby forcing of the outer pipe into the expanded operating form. If the thickness of the wall of the outer pipe is not substantially constant outside the recess/recesses, said thickness of the wall of the outer pipe in the parts of the outer pipe following the first circle in the first operating form may refer to the highest value, to the lowest value or to the average value of the thickness of the wall of those parts.

In the example of Fig. 1 the shape of the recesses 103 is substantially a rectangle with rounded corners. In other embodiments, different shapes of the recesses may be used, such as substantially "U" or rounded "V" shaped recesses. In general terms, any suitable shape may be used such that the perimeter of the wall of the outer pipe is, as a result of the recess, as a whole longer than the perimeter of the first circle, and which shape may be at least partly straightenable so as to enable the outer pipe to be forced into the expanded operating form.

Each of the recesses 103 extends as an elongated shape in a longitudinal direction of the outer pipe along at least part of the length of the outer pipe instead of being merely a point-form or local depression in one cross-sectional plane of the outer pipe. One or more of the recesses may extend substantially through the full length of the outer pipe. In some embodiments it is also possible that an individual recess extends only along a part of the length of the outer pipe, but the outer pipe may include other recesses such that substantially along the full length of the outer pipe there is at any point in the cross-section of the outer pipe one recess or more recesses. If the advantage primarily sought amongst the advantages enabled by the expanded operating form is only the locking of the outer pipe in place in the geothermal well, it may be possible that one or more recesses extend only along a part of the length of the outer pipe. In this case it may even be possible that most of the length of the outer pipe located in the geothermal well is free of the recesses.

The elongated recess may be parallel to the centre axis of the outer pipe. It is also possible that the elongated recess is arranged at an angle in relation to said centre axis, such that it spirals around the centre axis of the outer pipe like a helix.

The outer pipe of Fig. 1 may be manufactured into the first operating form by an extruding process which is known per se. In extruding, pipe may be output as a continuous structure directly to a desired final cross-sectional shape.

When the outer pipe is manufactured by extruding, the recesses of the first operating form can be arranged to have similar material properties with the rest of the wall of the outer pipe. In other words, this way the material of the outer pipe is crystallized also in the recesses, unlike for example if the recesses were formed by thermoforming or by some other deformation process producing deformations in the material at a later stage. This may provide the advantage that the recesses do not stretch when the outer pipe is being forced into the expanded operating form, and thus no deformation as such but only bending of the material takes place in the recesses. The recesses formed from a crystallized plastic material may also be sufficiently strong such that it is possible for example to prevent gradual expansion of the outer pipe, having been forced into the expanded operating form by means of internal pressure, into a possible cavity located in the wall of the geothermal well as a result of stretching or creeping. Such unrestricted expansion could excessively thin down the wall of the outer pipe and lead to breakage of the outer pipe.

Also when the outer pipe is originally manufactured in some suitable form differing from the first operating form, it may be manufactured by extruding.

When forcing into the expanded operating form is based on straightening of the one of more recesses, formed from a material which is similar to the material of the rest of the outer pipe, by bending fully or partly instead of actual deformation, the straightening is reversible. In other words, the outer pipe is kept in the expanded operating form only if forcing into the expanded operating form for example by means of internal pressure in the pipe is continued.

When the outer pipe comprises several recesses in different locations along the perimeter of the outer pipe, the recesses may function as centralizers when the inner pipe is being installed within the outer pipe. In other words, by means of the recesses located and dimensioned in a suitable manner, for example as illustrated in Fig. 1, it may be ensured that the inner pipe is arranged within the outer pipe substantially concentrically, i.e. coaxially, such that a sufficient gap is provided around the inner pipe between the inner pipe and the portions of the outer pipe following the shape of the circle on all sides of the inner pipe, which gap may be of consistent width. Such positioning of the outer and inner pipe in relation to each other enables the heat collecting fluid to flow substantially symmetrically and steadily throughout the entire inner surface of the outer pipe, enhancing heat transfer between the heat transfer piping and the bedrock surrounding the geothermal well.

Drawing C) of Fig. 1 illustrates the outer pipe shaped into an installation form differing from the first operating form provided by the manufacturing process. The installation form is selected in such a way that in the installation form the maximum diameter Dₘₐₓ of the cross-section of the outer pipe is smaller than the diameter D₁ of the first circle 101 indicated by a dashed line in the figure. This diameter is equal to the diameter of the portion of the outer pipe substantially following the first circle in said first operating form having a substantially round cross-section.

The diameter of the cross-section may in general terms be determined as a distance between two points located on the inner face of the surface of the outer pipe. On the other hand, the diameter of the cross-section may be determined as a distance considering the thickness of the wall between two points located on the outer face of the surface of the outer pipe or for example in the middle of the wall in a perpendicular direction through the surface. The last-mentioned determination is applied in Fig. 1.

The maximum diameter of the cross-section of the outer pipe in the installation form is intended to mean the maximum distance along a straight line segment joining two points of the surface of the outer pipe.

In the round form the diameter is naturally constant and is determined along a line segment passing via the centre of the circle.

As a result of said difference in the diameter of the outer pipe between the first operating form and the installation form, the outer pipe takes less space in the installation form in all lateral directions transverse in relation to the longitudinal direction of the pipe than in the operating form.

The "installation form" signifies that the outer pipe may be installed, i.e. inserted into the geothermal well in the installation form and not be opened to the first operating form until in the geothermal well. The diameter of the installation form which is smaller than that of the first operating form as described above may facilitate the installation of the outer pipe into the geothermal well especially in the case of very deep geothermal wells. This way it is possible to dimension the diameter of the outer pipe in the first operating form closer to the diameter of the geothermal well as compared to installing it when the outer pipe is in the first operating form. Thereby, it is also possible to make the size difference, needed for pressing the outer pipe against the wall of the geothermal well, between the expanded operating form and the first operating form to be reasonably small. This may facilitate forcing of the outer pipe into the expanded operating form.

In the example illustrated in drawing C) of Fig. 1, in the installation form of the outer pipe 100 the wall 105 of the pipe forming the surface of the outer pipe is pressed inwardly at one point towards the opposite point of the surface. As a result, the wall of the outer pipe is substantially twofold, and the outer pipe has a first portion 105¹ and a second portion 105² of the wall of the outer pipe, which portions are arranged substantially against each other. Thus, the wall of the outer pipe of the installation form forms a groove-like structure in the cross-section of the outer pipe.

In the example of Fig. 1 the recesses are located along the perimeter of the outer pipe such that in the first operating form, three recesses are located on one side of the outer pipe as seen from a horizontally drawn line segment 106 extending along the diameter of the first circle indicated in Fig. 1, in the first portion 105¹ of the wall of the outer pipe, and one recess is located on the other side of this diameter in the second portion 105² of the wall of the outer pipe. In this configuration the wall of the outer pipe is free of the recesses at the opposite points located at said line segment 106, i.e. at the diameter of the first circle. This may facilitate shaping of the outer pipe into the substantially twofold installation form.

The recesses are further positioned such that in the substantially twofold installation form, the recesses located in the first and the second portion of the wall of the outer pipe are arranged in the installation form offset from each other. The offset positioning signifies that no two recesses are arranged opposite each other, which would prevent the first and the second portion of the wall of the outer pipe from coming close to each other, substantially against each other. Instead, the recesses will be arranged adjacent to each other, whereby the first and the second portion of the wall of the outer pipe may be spaced from each other in the installation form of the outer pipe by the height of the recesses.

An outer pipe 200 illustrated in Fig. 2 in the installation form differs from the outer pipe of Fig. 1 in terms of the number and location of the recesses. In the example of Fig. 2, in a first portion 205¹ of the wall 205 of the outer pipe there are two adjacent recesses 203¹ relatively close to each other. In a second portion 205² of the outer pipe, located substantially against the first portion in the installation form, there is one recess 203¹. The width and shape of this recess are matched to the spacing distance and shape of the recesses of the other portion in such a way that it may be pressed between the two adjacent recesses of the first portion, so as to be locked between these two recesses. This way the outer pipe may be kept in the installation form until it is opened to the first operating form in the geothermal well.

In other embodiments the offset of the recesses located in the first and the second portion of the outer pipe may be achieved in other ways providing the locking effect as described above or not providing such effect.

When manufacturing the outer pipe it is possible to shape the cross-section of the outer pipe, which is substantially round for the main part thereof, right after the actual, for example extruding based manufacturing process by guiding the outer pipe at an elevated temperature through a roller assembly for shaping the cross-section, whereby upon cooling the pipe remains in this shaped form. This way it is possible to provide an outer pipe which is already shaped into the installation form in a controlled and precise manner under factory conditions. It is also possible to shape the outer pipe which has been initially manufactured or later shaped into the substantially round first operating form into the installation form at a later stage, for example at the installation site.

By using an outer pipe which is shapeable into the installation form and insertable into the geothermal well in the installation form, the thickness of the wall of the outer pipe may be selected to be different in different parts along the perimeter of the wall of the outer pipe.

In the installation form having a smaller maximum diameter than the diameter of the first circle in the cross-section of the outer pipe, part of the wall of the outer pipe is nested inside the rest of the wall. In the examples of drawing C) of Fig. 1 and Fig. 2 this part substantially corresponds to the second portion 105², 205² of the wall of the outer pipe. When the outer pipe is being fed into the geothermal well, this part of the outer pipe is not able to contact the wall of the geothermal well. It is therefore not required to have an equally high wear resistance as the other portion of the wall of the outer pipe. Thus, it is possible to economize on the amount of material of the outer pipe if in that part the thickness of the wall of the outer pipe is smaller than in the rest of the outer pipe.

At the same time, the smaller thickness of the wall may facilitate opening of the outer pipe from the installation form to the first operating form. Further, the thinner wall may provide the advantage that when the outer pipe is being opened to the installation form using pressure, it may be sufficient to carry out the opening with a pressure which does not yet straighten the recesses. This way it is possible to first open the outer pipe from the installation form to the first operating form with a lower internal pressure in the outer pipe. After that the pressure may be raised to the operating pressure of the heat transfer piping and the outer pipe be forced, as a result of at least partial straightening of the one or more recesses, into the expanded operating form.

The above-described smaller thickness of the wall of the outer pipe may be for example 10 - 60 %, for example 20 - 40 % smaller than the thickness of the wall in the rest of the wall of the outer pipe outside the recesses.

The heat transfer piping inserted into the geothermal well must be closed from the end located at the lower end of the geothermal well as for the outer jacket/pipe while the inner pipe is open at this end of the piping. As a result, the inner pipe and the volume between the inner pipe and the outer jacket/pipe form one continuous flow volume in which the direction of the flow is reversed at said end of the piping. Closing of the end of the outer pipe may be implemented in a manner which is known per se in its basic principle, using an end piece which is connectable to the end of the outer pipe.

Installation of the outer pipe into the geothermal well in the installation form and opening thereof to the first operating form may be taken into consideration in the shape of the end piece. The end piece may be a downwardly tapering, conical piece, the cross-sectional shape of which is substantially the same as the shape of the outer pipe in the installation form. In this case, the end piece may open in the same way as the outer pipe, such that there will be no areas in the plastic material in the end piece requiring larger deformation than the deformations of the rest of the outer pipe. Because the cross-section of the end piece is the same as that of the outer pipe in the installation form, it is possible to join it to the outer pipe e.g. by a hot plate welding method. The end piece may be manufactured e.g. by casting to the same cross-sectional shape as the outer pipe in the installation form. As another alternative the end piece may be collapsed after it has been joined to the outer pipe at the same time with collapsing the outer pipe into the installation form.

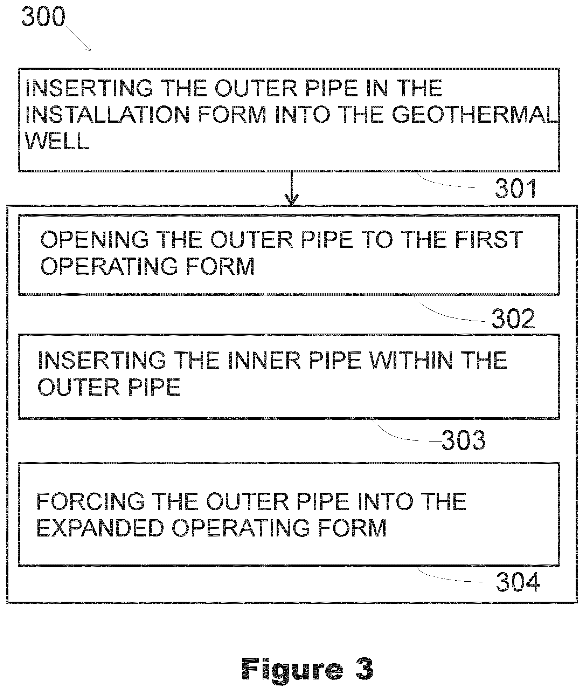

Any outer pipe as described above may be used in the method of Fig. 3.

In a first step of the method 301 the outer pipe shaped into the installation form is inserted into the geothermal well.

In step 302 the outer pipe inserted into the geothermal well is opened to the first operating form.

Any suitable method may be used for opening the outer pipe. For example, for opening a polyethylene pipe, heat and/or pressure may be utilized. It may for example be possible to cause the pipe to open just by feeding a liquid, for example water or a liquid heat transfer medium used for the heat transfer, at a sufficiently elevated temperature into the outer pipe. The hydrostatic pressure of the liquid accumulating in the pipe may then together with the heat cause the pipe to open to the first operating form.

To boost the opening, a pressurized liquid may be fed to the outer pipe, possibly at an elevated temperature. By means of the pressurization, a sufficient opening force may be ensured regardless of the hydrostatic pressure. As another fact, the pressurized liquid may be used for opening the outer pipe also at the normal temperature.

The elevated temperature refers to a substantially higher temperature than the normal temperature of 20 °C. The elevated temperature may be for example at least 50 °C or at least 70 °C, for example approximately 80 °C.

The pressurizing refers to a substantially higher pressure than the standard atmosphere of appr. 1 bar. Such higher pressure may be for example at least 2 bar.

In other embodiments it may be possible, contrary to the example of Fig. 3, to install the outer pipe into the geothermal well in the first operating form. In this case the step of opening the outer pipe is not needed in the method.

In a third step 303 of the method of Fig. 3 the inner pipe of the heat transfer piping is inserted into the geothermal well, within the outer pipe arranged in the first operating form.

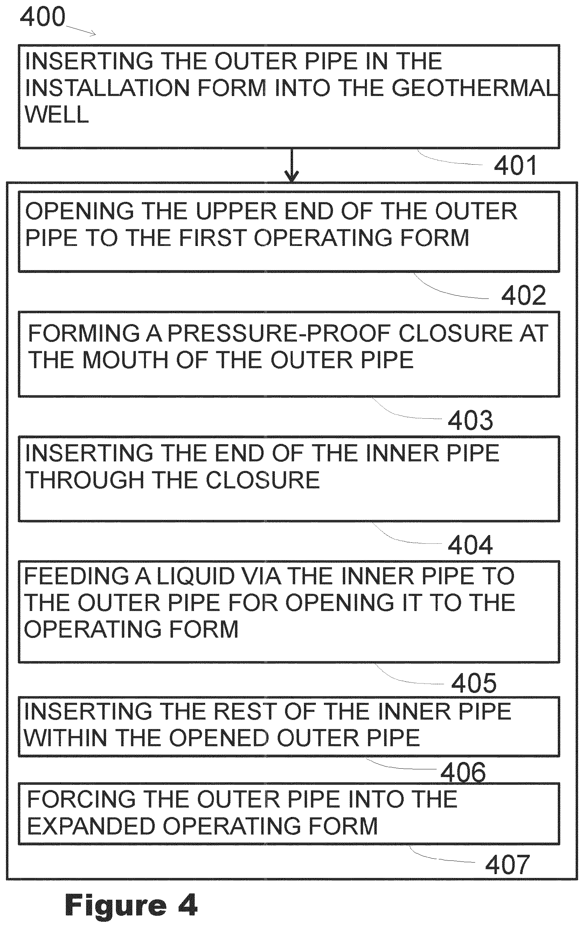

The inner pipe may be inserted within the outer pipe after the outer pipe has been opened to the operating form along the full length thereof. Alternatively, it is possible to insert part of the inner pipe within the outer pipe already in a stage when the outer pipe has been opened only along a part of the length thereof. Thus, the inner pipe may be inserted further within the outer pipe either step by step or continuously while the outer pipe is opening to the first operating form, i.e. while the portion of the outer pipe which has opened to the first operating form is expanding towards the bottom of the geothermal well. The second and the third step of the method may thus be performed either separately from each other or at least partly simultaneously or alternately so as to proceed step by step. The at least partly simultaneously performed second and third step are a particularly preferred approach in an embodiment in which a possibly pressurized liquid or gas is fed at an elevated temperature to the outer pipe via the inner pipe. An example of this embodiment is presented in Fig. 4.

In a fourth step 304 of the method the outer pipe is forced from the first operating form to the expanded operating form, whereby the outer pipe is arranged against the wall of the geothermal well and locks in place by means of friction. The forcing may be performed before the inner pipe has been inserted within the outer pipe, when the inner pipe has been partly inserted within the outer pipe, or when the inner pipe has been inserted within the outer pipe substantially along the full length thereof.

The pressure and/or elevated temperature of a liquid fed into the outer pipe may be utilized in the forcing into the expanded operating form.

In the installation method of Fig. 3 the pressure of a liquid fed into the outer pipe may thus be utilized in two stages, such that first by means of a lower pressure the outer pipe is opened to the first operating form and after that by means of a higher pressure it is forced into the expanded operating form.

In the method of Fig. 4, in a first step 401 the outer pipe is inserted into the geothermal well as in the method of Fig. 1, the outer pipe having been shaped into the installation form which may be any of the above-discussed installation forms.

In step 402 the outer pipe inserted into the geothermal well is opened at the upper end to the first operating form along a rather short distance. This distance may be form example at least 5 cm, preferably at least 10 cm, for example approximately 50 cm. This step may be carried out for example by forcing mechanically, i.e. by driving the wall of the outer pipe to the substantially round cross-sectional shape by means of a tool inserted within the outer pipe in the installation form. This tool may have for example a conical opening head which, as the opening head of the tool is being inserted deeper into the pipe, gradually expands the mouth of the outer pipe to the first operating form of the outer pipe.

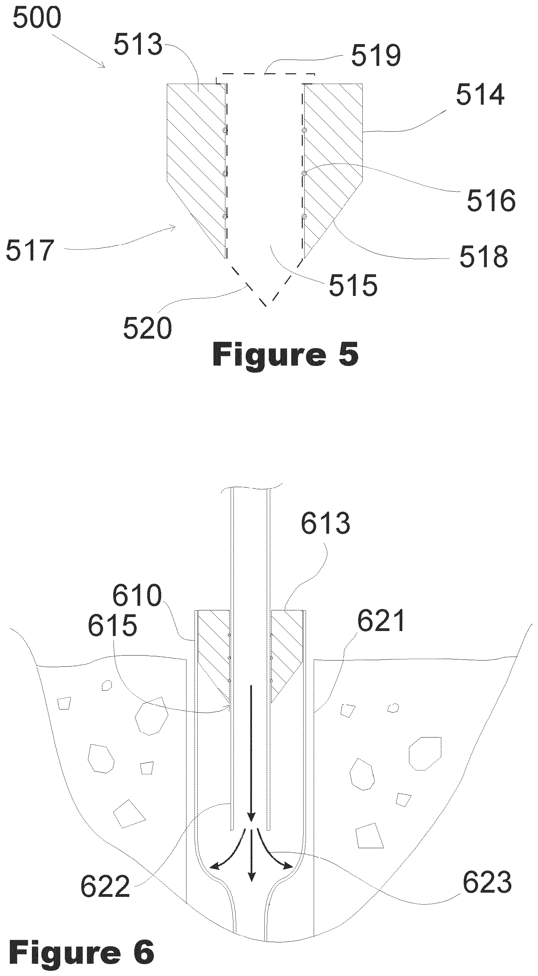

In step 403 a pressure-proof closure is formed at the mouth of the opened outer pipe in the first operating form. The closure may be formed by means of the same above-mentioned tool having a conical opening head. Thus, the closure may be formed substantially simultaneously with opening of the end of the outer pipe. An example of this tool is illustrated in Fig. 5.

The closure is formed in such a way that it enables, in step 404, sliding of the end of the inner pipe within the outer pipe in a pressure-proof manner.

The pressure-proofness is intended to mean that the closure enables the rise of pressure to an elevated pressure within the outer pipe without uncontrolled release of the pressure through or past the closure.

The upper end of the outer pipe may be opened and/or the closure may be formed for example by using a mouthpiece as illustrated in Fig. 5.

Next, in step 405, a possibly pressurized liquid is fed at an elevated temperature to the outer pipe via the inner pipe having thus been already partly, i.e. from the end thereof, inserted within the outer pipe for opening the outer pipe to the first operating form.

In step 406 the rest of the inner pipe is inserted into the geothermal well, within the outer pipe opened to the first operating form. Said forming of a pressure-proof closure allowing the sliding of the inner pipe therethrough enables this step to be performed gradually. In other words, the inner pipe may be inserted, step by step or continuously, further within the outer pipe while the outer pipe is opening to the first operating form. Thus, the pressurized liquid or gas may be fed to the outer pipe via the inner pipe until the entire outer pipe has opened to the operating form. In this embodiment, this step and the above-discussed step 405 of feeding a possibly pressurized liquid at an elevated temperature to the outer pipe may be carried out simultaneously or alternately so as to proceed step by step.

In other embodiments it is possible, in this step 405, to hold, from an end thereof, the inner pipe inserted within the outer pipe stationary and feed the possibly pressurized liquid at an elevated temperature to the outer pipe until it has opened to the first operating form substantially along the full length thereof. After this, in step 406, the rest of the inner pipe may be inserted within the outer pipe substantially in one single action.

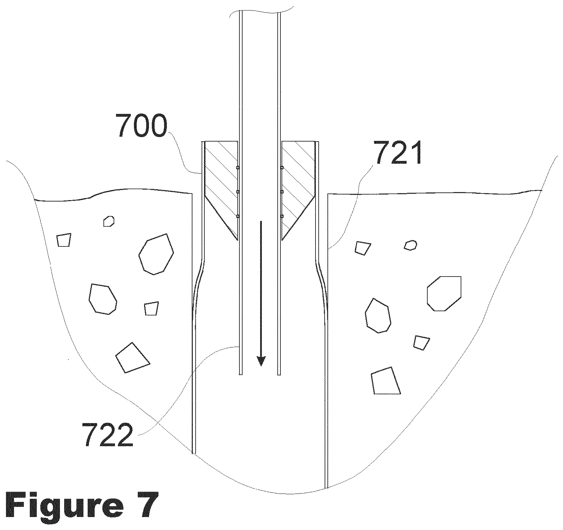

In step 407 the outer pipe is forced, by means of the pressure of the liquid fed into the outer pipe via the inner pipe, to the expanded operating form. In the above-described embodiments in which the rest of the inner pipe is not inserted within the outer pipe until after the entire outer pipe has been opened to the first operating form, also the forcing of the outer pipe to the expanded operating form may be performed before the inner pipe is fully inserted within the outer pipe. An example of this embodiment is illustrated in Fig. 7.

In the above-described methods, step 402 of opening the end of the outer pipe and step 405 of opening, either in one single action or so as to proceed step by step, the rest of the outer pipe thus collectively correspond to step 302 of the method of Fig. 3 in which the outer pipe is opened to the operating form. Correspondingly, step 404 of sliding the end of the inner pipe within the outer pipe and step 406 of inserting, either in one single action or step by step, the rest of the inner pipe within the outer pipe collectively correspond to step 302 of the method of Fig. 3 in which the inner pipe is inserted within the outer pipe. In the method of Fig. 4, step 407 corresponds to step 304 of forcing the outer pipe from the first operating form to the expanded operating form.

Further, in other embodiments it is possible to feed, in the initial stage, an unpressurized liquid at an elevated temperature to the outer pipe via the inner pipe for opening the outer pipe to the first operating form. Also in this case the inner pipe may be inserted within the outer pipe either substantially in one single action after the entire outer pipe has opened to the first operating form or alternatively step by step or by feeding continuously while the outer pipe is opening to the first operating form.

In the methods discussed above with reference to Fig. 3 and 4 the internal pressure in the outer pipe, by means of which pressure the outer pipe is forced into the expanded operating form, may be for example 3 - 4 bar above the hydrostatic pressure prevailing in the outer pipe. When the recesses are dimensioned and shaped in such a way that the pressure required for the straightening thereof is higher than the lowest pressure which is sufficient for opening the outer pipe from the installation form to the first operating form, it is possible to carry out the opening and expanding of the outer pipe in a controlled manner in two different steps.

A mouthpiece 513 of Fig. 5 may be included in an installation apparatus which may be used in the methods as described above for installing the coaxial heat transfer piping into the geothermal well drilled in the bedrock.

The mouthpiece 513 may be installed at the mouth of the outer pipe opened to the operating form from the end thereof in a pressure-proof manner. Against the sealing, on a cylindrical side surface 514 of the mouthpiece there may be some sealing arrangement implemented in a manner known per se for ensuring the pressure-proofness.

The mouthpiece comprises a through hole 515 passing therethrough, via which through hole the inner pipe may be inserted through the mouthpiece. The wall of the through hole is provided with sealing rings 516 which form a slide sealing arrangement for sealing the mouthpiece in a pressure-proof manner against the outer surface of the inner pipe when the inner pipe is fed through the through hole of the mouthpiece. Other types of slide sealing arrangements may be used in other embodiments.

The slide sealing arrangement is intended to mean that the gap between the mouthpiece and the inner pipe inserted through the through hole is sealed in a pressure-proof manner, so as to allow the inner pipe to be slid through the through hole without losing the pressure-proofness.

The mouthpiece comprises an opening head 517 for inserting the mouthpiece into the outer pipe such that the opening head is inserted first. The opening head 515 comprises a substantially frustoconical opening surface 516 around the through hole of the mouthpiece. In the example of Fig. 5 the opening surface extends from the edge of the through hole up to the edge of the cylindrical side surface 514 of the mouthpiece.

The substantially frustoconical opening surface 518 enables opening of the end of the outer pipe to the operating form by forcing the mouthpiece into the outer pipe such that the opening head is inserted first.

The mouthpiece as in Fig. 5 may comprise an inner part 519 which is removably insertable into the through hole of the mouthpiece, which inner part is indicated in Fig. 5 by a dashed line. The inner part comprises a substantially conical tip 520 extending, when inserted into the through hole of the mouthpiece, out from the through hole in the direction of the opening head of the mouthpiece. This tip which is narrower than the integral opening head of the mouthpiece may facilitate inserting of the mouthpiece into the outer pipe shaped into the installation form.

The mouthpiece may further comprise one or more pressure valves (not illustrated in the figure) which allow the pressure to be released from the outer pipe closed with the mouthpiece when the pressure exceeds a certain pressure limit.

In Fig. 6 a mouthpiece 613 according to Fig. 5 has been installed at the mouth of an outer pipe 600 inserted into a geothermal well 621 and opened to the operating form from the upper end thereof. The outer pipe may be as any outer pipe described above.

The end of an inner pipe 622 has been inserted through a through hole 615 of the mouthpiece, via which inner pipe a pressurized liquid 623, for example water, is fed at an elevated temperature to the outer pipe for opening the outer pipe to the first operating form. Fig. 6 illustrates a situation in which only the end of the inner pipe has been inserted within the outer pipe. As described above with reference to Fig. 4 it is possible to insert the inner pipe, by sliding it through the through hole of the mouthpiece, further into the outer pipe while the opening of the outer pipe to the operating form progresses. Further, it is possible to hold the inner pipe in the position according to Fig. 6 until the outer pipe has opened substantially along the full length thereof, and insert the inner pipe substantially along the full length thereof within the outer pipe only after that.

Inserting of the inner pipe substantially along the full length thereof within the outer pipe may also be performed only after the outer pipe has also been forced into the expanded operating form after having been opened to the first operating form. An example of this embodiment is illustrated in Fig. 7.

In Fig. 7 the installation arrangement may be the installation arrangement of Fig. 6 in an installation stage following the stage illustrated in Fig. 6.

In the situation illustrated in Fig. 7 still only the end of the inner pipe 722 has been inserted within the outer pipe. The outer pipe 700 has been opened, by means of the pressure arranged within the outer pipe by means of the liquid fed into the outer pipe via the inner pipe, to the expanded operating form, such that the outer pipe is pressed tightly against the wall of the geothermal well 721.

In the above-described embodiments, an insulated inner pipe may be used for providing a sufficient thermal insulation between a first flow channel formed by the inner pipe and a second flow channel formed between the inner pipe and the outer pipe. In selecting the thermal insulation, a sufficient compressive strength of the insulation material, depending on the hydrostatic pressure determined by the depth of the geothermal well, should then be taken into consideration. Another issue to be considered in selecting the material is the buoyancy exerted on an insulation material which is lighter than the heat transfer fluid.

It should be noted that the embodiments of the invention are not limited merely to the above-described examples and embodiments, but also other embodiments are possible within the scope of the claims.

## Claims

1. An outer pipe (100) formed from a crystallized plastic material for forming an outer jacket of a coaxial heat transfer piping, which outer pipe has a first operating form in which, in a cross-section of the outer pipe, a main part of a wall of the outer pipe substantially follows a first circle (101),
wherein the wall (105) of the outer pipe comprises an elongated recess (103) extending in a longitudinal direction of the outer pipe, at which recess in the cross-section of the outer pipe in the first operating form of the outer pipe the wall of the outer pipe deviates inwardly from said perimeter of the first circle (101), such that the perimeter of the wall of the outer pipe is longer than the perimeter of said first circle, **characterized in that** the outer pipe is forceable into an expanded operating form in which said main part of the wall of the outer pipe in the cross-section of the outer pipe substantially follows, as a result of straightening of the recess (103), a second circle (104) which is larger than the first circle.

2. An outer pipe (100) according to claim 1, wherein thickness of the wall (105) of the outer pipe at the recess (103) is smaller, for example 10 - 60 % smaller, than in parts of the outer pipe following the first circle (101) in the first operating form for facilitating the straightening of the recess and thereby forcing of the outer pipe into the expanded operating form.

3. An outer pipe (100) according to claim 1 or 2, wherein the wall (105) of the outer pipe comprises at least two said recesses (103) at a distance from each other in different locations of the cross-section of the outer pipe.

4. An outer pipe (100) according to any one of claims 1 - 3, wherein the diameter of the second circle (104) is at least 5, for example at least 7, for example at least 10, for example at least 20 % longer than the diameter of the first circle (101).

5. An outer pipe according to any one of claims 1 - 4, wherein in the first operating form said main part of the wall (105) of the outer pipe in the cross-section of the outer pipe extends along a portion of at least 70 %, for example along a portion of at least approximately 85 % of the perimeter of said first circle (101).

6. An outer pipe (100) according to any one of claims 1 - 5, which is shapeable into an installation form of a smaller maximum diameter of the cross-section thereof than the diameter of the first circle (101) for installing the outer pipe into a geothermal well in the installation form and for opening it in the geothermal well to the first operating form.

7. An outer pipe (100) according to claim 6, wherein in the installation form the wall (105) of the outer pipe is substantially twofold, whereby the outer pipe has a first and a second portion (105¹, 105²) of the wall of the outer pipe, which portions are arranged substantially against each other.

8. An outer pipe (100) according to claim 7, wherein in the cross-section of the outer pipe the wall (105) of the outer pipe is, at opposite points located at the diameter (106) of said first circle, free of the recesses for facilitating shaping into said substantially twofold installation form.

9. An outer pipe (100) according to claim 7 or 8, in which there is at least one recess (103) in each said portion (105¹, 105²) of the wall of the outer pipe, which recesses located in the first and the second portion of the wall of the outer pipe are arranged in the installation form offset from each other.

10. An outer pipe (200) according to claim 9, in which there are, in a first portion (205¹) of the wall of the outer pipe, two recesses (203²) located and shaped so as to lock a recess (203²) located in a second portion (205²) of the wall of the outer pipe therebetween in the installation form of the outer pipe for holding the outer pipe in the installation form.

11. An outer pipe (100) according to any one of claims 1 - 10, which has been manufactured into the first operating form by extruding.

12. A method (300) for installing a coaxial heat transfer piping into a geothermal well, in which method
- an outer pipe according to any one of claims 1 - 11 forming an outer jacket of the heat transfer piping is inserted into the geothermal well (301); and
- the outer pipe is forced from a first operating form into an expanded operating form, such that the outer pipe is arranged against the wall of the geothermal well (304).

13. A method (300) according to claim 12, wherein an outer pipe according to any one of claims 6 - 11 having been shaped into an installation form is inserted into the geothermal well (301); and
- the outer pipe inserted into the geothermal well is opened from the installation form to the first operating form (302).

14. A method (300) according to claim 13, in which method opening (301) the outer pipe comprises feeding a liquid to the outer pipe inserted into the geothermal well, a temperature of which liquid is above 50 °C, preferably at least 70 °C, for example approximately 80 °C.

15. A method (400) according to claim 14, wherein the liquid is fed into the outer pipe via an inner pipe installed within the outer pipe.

16. A method (300) according to any one of claims 12 - 15, wherein the outer pipe installed into the geothermal well is forced from the first operating form into the expanded operating form by means of pressure of the liquid fed into the outer pipe.

## Patentansprüche

1. Außenrohr (100), das aus einem kristallisierten Kunststoffmaterial gebildet ist, zum Bilden eines Außenmantels eines koaxialen Wärmeübertragungsrohrs, wobei das Außenrohr eine erste Betriebsform aufweist, in der, in einem Querschnitt des Außenrohrs, ein Hauptteil einer Wand des Außenrohrs im Wesentlichen einem ersten Kreis (101) folgt, wobei die Wand (105) des Außenrohrs eine längliche Aussparung (103) umfasst, die sich in longitudinaler Richtung des Außenrohrs erstreckt, wobei an dieser Aussparung im Querschnitt des Außenrohrs in der ersten Betriebsform des Außenrohrs, die Wand des Außenrohrs nach innen von dem Umfang des ersten Kreises (101) abweicht, derart, dass der Umfang der Wand des Außenrohrs länger ist als der Umfang des ersten Kreises, **dadurch gekennzeichnet, dass** das Außenrohr in eine erweiterte Betriebsform gezwungen werden kann, in der der Hauptteil der Wand des Außenrohrs im Querschnitt des Außenrohrs im Wesentlichen einem zweiten Kreis (104) folgt, der größer ist als der erste Kreis, als ein Resultat der Begradigung der Aussparung (103).

2. Außenrohr (100) gemäß Anspruch 1, wobei die Dicke der Wand (105) des Außenrohrs an der Aussparung (103) geringer ist, beispielsweise 10 - 60 % geringer, als in Teilen des Außenrohrs, die dem ersten Kreis (101) in der ersten Betriebsform folgen, zum Erleichtern des Begradigens der Aussparung und damit des Zwingens des Außenrohrs in die erweiterte Betriebsform.

3. Außenrohr (100) gemäß Anspruch 1 oder 2, wobei die Wand (105) des Außenrohrs mindestens zwei Aussparungen (103) umfasst, die in einer Distanz voneinander an verschiedenen Orten des Querschnitts des Außenrohrs angeordnet sind

4. Außenrohr (100) gemäß einem der Ansprüche 1 - 3, wobei der Durchmesser des zweiten Kreises (104) mindestens 5, beispielsweise mindestens 7, beispielsweise mindestens 10, beispielsweise mindestens 20 % länger ist als der Durchmesser des ersten Kreises (101).

5. Außenrohr gemäß einem der Ansprüche 1 - 4, wobei in der ersten Betriebsform der Hauptteil der Wand (105) des Außenrohrs im Querschnitt des Außenrohrs sich entlang eines Abschnitts von mindestens 70 %, beispielsweise entlang eines Abschnitts von mindestens etwa 85 % des Umfangs des ersten Kreises (101) erstreckt.

6. Außenrohr (100) gemäß einem der Ansprüche 1 - 5, das in eine Einbauform mit einem kleineren maximalen Querschnittsdurchmesser als dem Durchmesser des ersten Kreises (101) formbar ist, um das Außenrohr in der Einbauform in ein geothermisches Bohrloch einzubauen und es im geothermischen Bohrloch in die erste Betriebsform zu öffnen.

7. Außenrohr (100) gemäß Anspruch 6, wobei in der Einbauform die Wand (105) des Außenrohrs im Wesentlichen zweifach ist, wodurch das Außenrohr einen ersten und einen zweiten Abschnitt (105¹, 105²) der Wand des Außenrohrs aufweist, wobei diese Abschnitte im Wesentlichen gegeneinander angeordnet sind.

8. Außenrohr (100) gemäß Anspruch 7, wobei im Querschnitt des Außenrohrs die Wand (105) des Außenrohrs an gegenüberliegenden Punkten, die am Durchmesser (106) des ersten Kreises lokalisiert sind, frei von den Aussparungen ist, zum Erleichtern des Formens in die im Wesentlichen zweifache Einbauform.

9. Außenrohr (100) gemäß Anspruch 7 oder 8, in dem sich in jedem der Bereiche (105¹, 105²) der Wand des Außenrohrs mindestens eine Aussparung (103) befindet, wobei die Aussparungen, die im ersten und zweiten Bereich der Wand des Außenrohrs lokalisiert sind, in der Einbauform versetzt zueinander angeordnet sind.

10. Außenrohr (200) gemäß Anspruch 9, bei dem sich, in einem ersten Bereich (205¹) der Wand des Außenrohrs, zwei Aussparungen (203²) befinden, die so lokalisiert und geformt sind, dass sie eine Aussparung (203²) in einem zweiten Abschnitt (205²) der Wand des Außenrohrs in der Einbauform des Außenrohrs zum Halten des Außenrohrs in der Einbauform zwischen sich einklemmen.

11. Außenrohr (100) gemäß einem der Ansprüche 1 - 10, das durch Extrudieren in die erste Betriebsform hergestellt wurde.

12. Verfahren (300) zum Einbauen eines koaxialen Wärmeübertragungsrohrs in ein geothermisches Bohrloch, wobei bei diesem Verfahren
- ein Außenrohr gemäß einem der Ansprüche 1 - 11, das einen Außenmantel des Wärmeübertragungsrohrs bildet, in das geothermische Bohrloch (301) eingesetzt wird; und
- das Außenrohr aus einer ersten Betriebsform in eine erweiterte Betriebsform gezwungen wird, derart, dass das Außenrohr an der Wand des geothermischen Bohrlochs (304) anliegt.

13. Verfahren (300) gemäß Anspruch 12, wobei ein Außenrohr gemäß einem der Ansprüche 6 - 11, das in einer Einbauform geformt wurde, in das geothermische Bohrloch (301) eingesetzt wird; und
- wobei das in das geothermische Bohrloch eingesetzte Außenrohr von der Einbauform in die erste Betriebsform (302) geöffnet wird.

14. Verfahren (300) gemäß Anspruch 13, wobei bei dem Verfahren das Öffnen (301) des Außenrohrs das Einspeisen einer Flüssigkeit in das in das geothermische Bohrloch eingesetzte Außenrohr umfasst, wobei eine Temperatur dieser Flüssigkeit bei über 50 °C, bevorzugt mindestens 70 °C, beispielsweise etwa 80 °C, liegt.

15. Verfahren (400) nach Anspruch 14, wobei die Flüssigkeit über ein innerhalb des Außenrohrs eingebautes Innenrohr in das Außenrohr zugeführt wird.

16. Verfahren (300) gemäß einem der Ansprüche 12 - 15, wobei das in das geothermische Bohrloch eingebaute Außenrohr durch den Druck der in das Außenrohr zugeführten Flüssigkeit aus der ersten Betriebsform in die erweiterte Betriebsform gezwungen wird.

## Revendications

1. Tuyau (100) externe formé à partir d'un matériau plastique cristallisé pour former une chemise externe d'une tuyauterie de transfert de chaleur coaxiale, lequel tuyau externe présente une première forme de fonctionnement dans laquelle, dans une section transversale du tuyau externe, une partie principale d'une paroi du tuyau externe suit sensiblement un premier cercle (101), dans lequel la paroi (105) du tuyau externe comprend un évidement (103) allongé s'étendant dans une direction longitudinale du tuyau externe, évidement au niveau duquel, dans la section transversale du tuyau externe dans la première forme de fonctionnement du tuyau externe, la paroi du tuyau externe s'écarte vers l'intérieur dudit périmètre du premier cercle (101), de sorte que le périmètre de la paroi du tuyau externe est plus long que le périmètre dudit premier cercle, **caractérisé en ce que** le tuyau externe peut être contraint dans une forme de fonctionnement étendue dans laquelle ladite partie principale de la paroi du tuyau externe dans la section transversale du tuyau externe suit sensiblement, à la suite du redressement de l'évidement (103), un second cercle (104) qui est plus grand que le premier cercle.

2. Tuyau (100) externe selon la revendication 1, dans lequel l'épaisseur de la paroi (105) du tuyau externe au niveau de l'évidement (103) est plus petite, par exemple de 10 à 60 % plus petite, que dans des parties du tuyau externe suivant le premier cercle (101) dans la première forme de fonctionnement, afin de faciliter le redressement de l'évidement et ainsi contraindre le tuyau externe dans la forme de fonctionnement étendue.

3. Tuyau (100) externe selon la revendication 1 ou la revendication 2, dans lequel la paroi (105) du tuyau externe comprend au moins deux dits évidements (103) à une certaine distance l'un de l'autre à différents endroits de la section transversale du tuyau externe.

4. Tuyau (100) externe selon l'une quelconque des revendications 1 à 3, dans lequel le diamètre du second cercle (104) est au moins 5, par exemple au moins 7, par exemple au moins 10, par exemple au moins 20 % plus long que le diamètre du premier cercle (101).

5. Tuyau externe selon l'une quelconque des revendications 1 à 4, dans lequel, dans la première forme de fonctionnement, ladite partie principale de la paroi (105) du tuyau externe dans la section transversale du tuyau externe s'étend le long d'une portion d'au moins 70 %, par exemple le long d'une portion d'au moins environ 85 % du périmètre dudit premier cercle (101).

6. Tuyau (100) externe selon l'une quelconque des revendications 1 à 5, qui est façonnable en une forme d'installation d'un diamètre maximal plus petit de sa section transversale que le diamètre du premier cercle (101) pour installer le tuyau externe dans un puits géothermique dans la forme d'installation et pour l'ouvrir dans le puits géothermique vers la première forme de fonctionnement.

7. Tuyau (100) externe selon la revendication 6, dans lequel, dans la forme d'installation, la paroi (105) du tuyau externe est sensiblement double, de telle sorte que le tuyau externe présente une première et une seconde portion (105¹, 105²) de la paroi du tuyau externe, lesquelles portions sont agencées sensiblement l'une contre l'autre.

8. Tuyau (100) externe selon la revendication 7, dans lequel, dans la section transversale du tuyau externe, la paroi (105) du tuyau externe est, à des points opposés situés sur le diamètre (106) dudit premier cercle, dégagée des renfoncements pour faciliter le façonnage dans ladite forme d'installation sensiblement double.

9. Tuyau (100) externe selon la revendication 7 ou la revendication 8, dans lequel se trouve au moins un évidement (103) dans chaque portion (105¹, 105²) de la paroi du tuyau externe, lesquels renfoncements situés dans la première et la seconde portion de la paroi du tuyau externe sont agencés dans la forme d'installation de manière décalée l'un par rapport à l'autre.

10. Tuyau (200) externe selon la revendication 9, dans lequel se trouvent, dans une première portion (205¹) de la paroi du tuyau externe, deux évidements (203²) situés et façonnés de manière à verrouiller un évidement (203²) situé dans une seconde portion (205²) de la paroi du tuyau externe entre ceux-ci dans la forme d'installation, afin de maintenir le tuyau externe dans la forme d'installation.

11. Tuyau (100) externe selon l'une quelconque des revendications 1 à 10, qui a été fabriqué dans la première forme de fonctionnement par extrusion.

12. Procédé (300) d'installation d'une tuyauterie de transfert de chaleur coaxiale dans un puits géothermique, procédé dans lequel
- un tuyau externe selon l'une quelconque des revendications 1 à 11 formant une chemise externe de la tuyauterie de transfert de chaleur est inséré dans le puits géothermique (301) ; et
- le tuyau externe est poussé à passer d'une première forme de fonctionnement à une forme de fonctionnement étendue, de sorte que le tuyau externe soit agencé contre la paroi du puits géothermique (304).

13. Procédé (300) selon la revendication 12, dans lequel un tuyau externe selon l'une quelconque des revendications 6 à 11 ayant été façonné en une forme d'installation est inséré dans le puits géothermique (301) ; et
- le tuyau externe inséré dans le puits géothermique est ouvert de la forme d'installation à la première forme d'exploitation (302).

14. Procédé (300) selon la revendication 13, dans lequel l'ouverture (301) du tuyau externe comprend l'acheminement d'un liquide vers le tuyau externe inséré dans le puits géothermique, liquide dont une température est supérieure à 50 °C, préférablement d'au moins 70 °C, par exemple d'environ 80 °C.

15. Procédé (400) selon la revendication 14, dans lequel le liquide est acheminé dans le tuyau externe par l'intermédiaire d'un tuyau interne installé à l'intérieur du tuyau externe.

16. Procédé (300) selon l'une quelconque des revendications 12 à 15, dans lequel le tuyau externe installé dans le puits géothermique est contraint de la première forme de fonctionnement vers la forme de fonctionnement étendue au moyen d'une pression du liquide acheminé dans le tuyau externe.
